# EUROPEAN PATENT APPLICATION

(11) **EP 2 955 688 A1**
(43) Date of publication of application: **16.12.2015**
(21) Application number: 15171349.2
(22) Date of filing: 10.06.2015
(51) Int. Cl.: G06Q 50/16

(54) **SYSTEM FOR PROVIDING PROPOSAL OF DECORATION FOR RESIDENCE OR EXHIBIT AND METHOD FOR THE SAME**

(30) Priority: 11.06.2014 TW 103120179
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

Disclosure herein is related to a system for providing proposal of decoration for residence or exhibit and a method for the same. According to one of the embodiments of the method, the alleged system firstly receives request message from a terminal device (22) at a residence or exhibit place (243). From the request message, the system analyzes the message and retrieves the information concerning at least one designer (241) and the residence or exhibit place (243). Next, the designer's style, layout of the residence or exhibit place (243), and the corresponding furnishings can be obtained as in comparison with a database. One or more arrangement proposals can be provided as it is generated in the system. The one or more proposals are then delivered to the terminals device (22). The any proposal, including a synthetic image, notified to a user renders a convenient way to dispose the furnishings at the exhibit place.

## Description

### BACKGROUND

### 1. Technical Field

The present invention is related to a method and system for providing proposal of furnishing decoration for residence or exhibit place; in particular to the method and system for providing any designer's proposal of furnishing decoration with respect to a specific place.

### 2. Description of Related Art

In the conventional technology, the real estate agent needs to announce messages via the various media advertising for the purpose of promotion of housing sales. The interested people may make an appointment with the real estate agent to arrive the real estate for investigation. If the real estate is a new house, the people can realize the status of the housing through simple furnishing or the infrastructure; otherwise, the visitor may merely see the original decoration if it is an old house.

Furthermore, for rapidly selling out the real estate, the old house may be repainted or the owner of the old house may ask for a designer to rearrange or to re-decorate the house. However, it may cost the owner a big money. The additional cost also raises the final price that may result in unexpected consequence such as the buyer hesitates to make the decision.

### SUMMARY

The conventional sales ways may not efficiently promote buying the real estates because the common housing decoration fails to show the features they should appear. For this reason, the present invention discloses a system and a method for providing proposal of furnishing decoration for the residence or the exhibit place. In the method, the retailers provide the furnishings and send service agents to the exhibit places. The service agent is such as a designer. The system will provide the proposal of furnishing decoration for the place when the service agent arrives at the place. The service agent is able to arrange the furnishings and/or the decorations based on the received proposal which appears a specific style. Not only the furnishings are reusable, but also the design applied to the appearance of the housing is at a lowest cost. The proposal efficiently promotes buying the housing.

According to one of the embodiments in the disclosure, in the method, the system first receives a request made by a terminal device. The system then retrieves information relating to at least one designer and a residence or an exhibit place as parsing the request message. As querying a database, the system gets the designer's style, layout of the residence or the exhibit place, and the information with corresponding furnishings. Accordingly, one or more proposals of the furnishing decoration is created, and delivered to the terminal device.

In one further embodiment, when the proposal of the furnishing decoration is created, the system may also provide a composite image combining the decoration with various furnishings with the space of residence or exhibit place. The terminal device is installed with an application program which is initiated to issue the request message, get data of position, and receive the proposal of furnishing decoration. The application program may read the bar code or wireless code for linking the disposal image of the furnishings.

In the system for performing the method for providing proposal of furnishing decoration in the exhibit place, a serving system is provided. The serving system includes a communication module for connecting with the terminal device, receiving the request message made by the terminal device, and transmitting the one or more proposals. The system has an analyzing module, which is used to parse the request message for retrieving information relating to designer and the residence or the exhibit place; further to have information relating to the designer's style, the layout of residence or exhibit place, and the furnishings as querying the database. The system also includes an image processing module, which is used to create a composite image of the residence or exhibit place with the furnishing decoration based on the designer's style, the layout of residence or exhibit place, and the information with respect to furnishings. The system has a database recording to the arrangement relating to the style, the designer's data, the information of furnishing retailer, data about the residence space or the exhibit place, and the information of the various furnishing elements.

The proposal of the furnishing decoration for the specific exhibit place is provided for the user to refer to decorating the residence or the exhibit place. Especially, the proposal is specified based on the designer's style, and the layout of the place such as the residence or exhibit.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

Fig. 1 shows a schematic diagram depicting a network architecture implementing the system for providing proposal of furnishing decoration for the residence or exhibit place in one embodiment;
Fig. 2 shows a function diagram describing the serving system for providing proposal of furnishing decoration for the residence or exhibit place;
Fig. 3 shows a flow chart illustrating method for providing proposal of furnishing decoration for residence space or exhibit place in one embodiment of the present invention;
Fig. 4 shows a flow chart illustrating method for providing proposal of furnishing decoration for residence space or exhibit place in another one embodiment of the present invention;
Fig. 5 shows a flow chart describing the steps for receiving the suggestion of arrangement of the furnishings.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

When a user or a construction-building company wants to sell 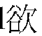 or rent a real estate, office space, or any place, he may decorate the place for promoting buying in addition to stating the real estate's features through advertisement and propaganda. According to the disclosure of the present invention, a system and a method for providing proposal of furnishing decoration for a residence or an exhibit place are provided. The system provides a database recording information of multiple designers, furnishing retailers, a variety of furnishing elements, style-based arrangements, and layouts of various housing space or exhibit places. Through software-implemented data mining technology, one or more proposals for the furnishing decoration are provided. The proposal allows the user to dispose the furnishings or decoration easily. It is noted that not only the system and method can be applied to the decoration for housing to be sold, but also for decorating the second-hand house or new house. It is characterized in that the system allows the user to decorate his house in accordance with a specific designer's style very conveniently.

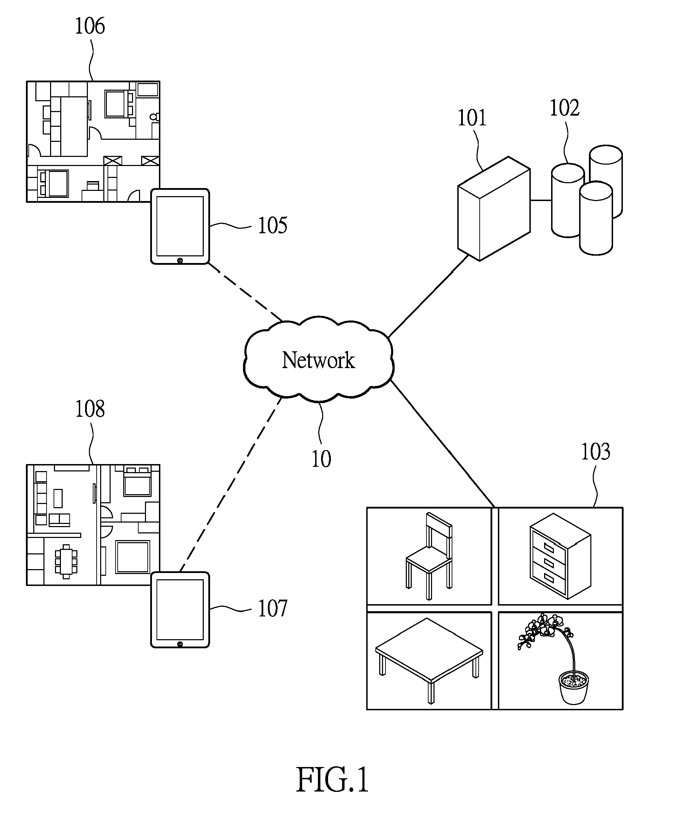

Reference is made to Fig. 1 showing a schematic diagram describing a circumstance of the system in accordance with the present invention.

The system for providing proposal of furnishing decoration for a residence or an exhibit place prepares a cloud-based system. The system allows the users at difference places to obtain one or more proposals of furnishing decoration everywhere. In particular, the proposal is directed to a specific designer's style associated with the layout of the residence or the exhibit place.

The system includes a serving system 101. The serving system 101 is disposed with a database 102, and connected with the many retailers 103 over a network 10. The retailer 103 is allowed to upload the information relating to the furnishings, decorations, and the elements. The uploaded information may include the prices of the elements, the designers, and the various styles. The proposals recorded in the database 102 are related to the suggestions of decoration using the furnishing elements provided by the designers. The proposal always reflects a specific style or the designer's preferences that are provided for the user to make a selection.

In one more application, the system and method for providing the proposal of furnishing decoration may be applied to various space of residence or the exhibit place when the user or construction-building company wants to sell the real estates in compliance with a specific style. That means the system provides a high flexibility and efficiency for decorating the space with the specific style and the corresponding elements.

In the diagram, the terminal devices 105 and 107 are able to acquire data from the serving system 101 over network 10. The terminal devices 105 and 107 issue an inquiry request to the serving system 101 and obtain the proposal(s) of furnishing decoration for the specific residence space or exhibit place. The serving system 101 provides the proposal(s) relating the designer(s) having the designs with respect to the residence space or exhibit place according to the request message made by the terminal devices 105, 107. For example, plan views 106, 108 may be provided and displayed at the terminal devices 105, 107.

The system for providing the furnishing decoration is preferably served by a cloud-based server. The system has a database recording the various elements such as the furnishings and decorations; design configurations with the selection of elements and corresponding arrangements such as placing angle and position; and the related personnel data having the designers, residence space or exhibit place. The serving system with the database for performing matching algorithm needs to be prepared. The database also records the images, scales, layouts related to the collected residence spaces and/or exhibit places. Further, the styles, characteristics, and data of the designers are also stored in the database for the purpose of inquiry for the users.

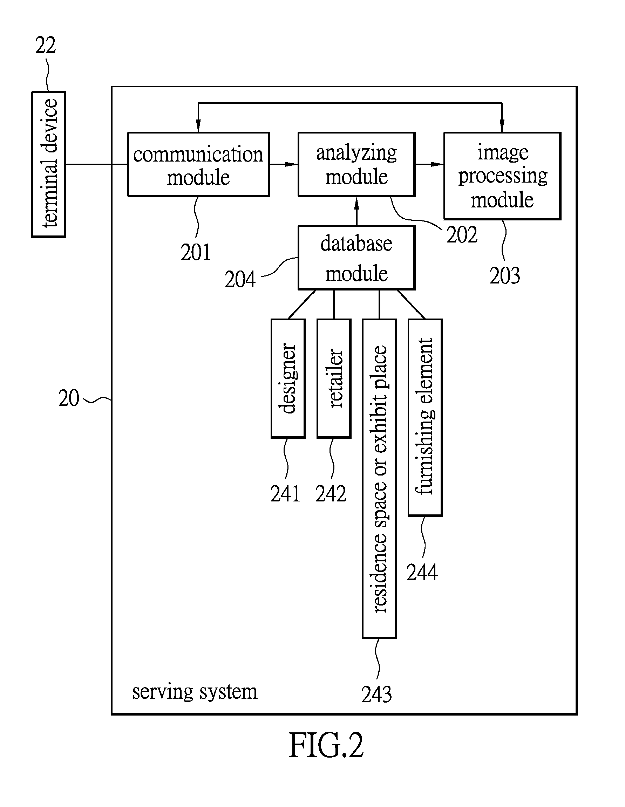

Fig. 2 shows a function diagram describing the serving system for rendering a proposal of furnishing decoration for the residence space or exhibit place according to one embodiment.

The serving system 20 may be a server host in a network. The functions may be implemented by means of hardware, software, or firmware. For example, the host is required to have a communication module 201 being a circuit for connecting with Internet and communication network. The communication module 201 allows the system to receive the request message made by the terminal device 22 and deliver one or more proposals. The terminal device 22 may thereby download the proposal(s) of furnishing decoration from the cloud.

The serving system 20 includes an analyzing module 202, which is a software-implemented or firmware-implemented function module. The analyzing module 202 analyzes the message sent by the terminal device 22 and acquires the data matching at least one designer and the residence space or exhibit place. Then a database module 204 retrieves the information relating to designer's style, the layout with corresponding residence space or exhibit place, and the furnishings. It is noted that the data in the database module 204 at least having the designer 241, the retailer 242, residence space or exhibit place 243, and furnishing elements 244. Those data is used to provide the information directed to the inquiry made by the user.

Further, when the terminal device 22 configures the inquiry having the designer's style, and the layout of residence space or exhibit place, and delivers to the serving system 20, an image processing module 203 of the serving system 20 generates a composite image depicting the decoration according to the matched designer's style, the layout of residence space or exhibit place, and the furnishings.

For example, a space is configured to have a kind of style with the designer configures his arrangement over the residence space or exhibit place. The arrangement includes the disposal of furnishing in the exhibit place. The categories, models, designers of furnishings, and positions of every element are recorded. The data also has plan views, three-dimensional diagrams, and images. Once these data is recorded in the database of the serving system 20, the serving system 20 is able to provide the precise proposal(s) of furnishing decoration for the various requests made by the terminal. Therefore, this cloud-based system efficiently provides the proposal(s) of furnishing decoration when the user needs to re-decorate the residence space or exhibit place, or transfers the decoration to another exhibit place.

According to one more embodiment of the invention, an application program is installed in the terminal device 22. The application program is performed to receiving and processing the proposal of furnishing decoration from the cloud-based serving system 20. The application program is such as an APP installed in the mobile device. In addition to transmitting the request message made by the terminal device 22, the application program may be initiated to receive an instant position of the terminal device 22. The position of the terminal device 22 is provided for performing comparison to refer to the location of the residence space or exhibit place. When the serving system 20 receives the position of the terminal device 22, one or more proposals of furnishing decoration may be produced and sent to the terminal device 22. The application program initiates an interface for the user to confirm one of the proposals. The application program also initiates an interface to receive the composite image of disposing the furnishings generated by the serving system 20. Further, the application program may initiate an input interface allowing the user to input his preferences concerning the property of the residence space or exhibit place. After that, the various inputs are collected to form a request message transmitted to the serving system 20. The serving system 20 produces one or more proposals of the furnishing decoration based on the request message made by the terminal device 22. Accordingly, the application program in the terminal device 22 also initiates a selection interface provided for the user to select one of the proposals. This selection will be transmitted to the serving system 20. The serving system 20 then delivers the related proposal including the description of disposal of the furnishings based on a designer's style. The proposal may include the composite image provided for the user to dispose the furnishings in accordance with the image.

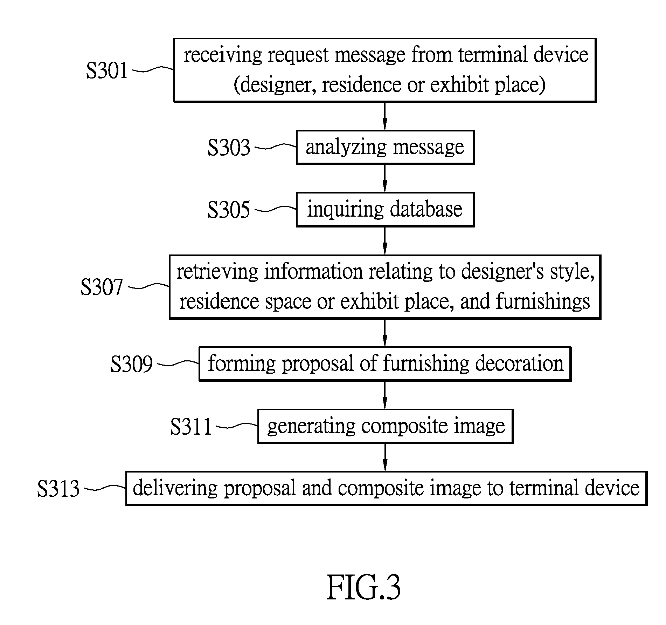

Reference is next made to Fig. 3 showing a flow chart describing the method for providing the furnishing decoration of the residence space or exhibit place according to one of the embodiments.

In the flow chart, in the beginning of step S301, the system receives the request message made by the terminal. The request message at least includes information relating to one or more designers, and a residence space or exhibit place. In step S303, the system analyzes the message sent from the terminal. The information relating to the designer(s) and the residence space or exhibit place can be retrieved from the message. Next, in step S305, the software-implemented function in the system first inquires the database for check if it exists the designer's style, layout of the residence space or exhibit place, and the related information of furnishings. If the information can be found in the database, the system successfully acquires the designer's style, the layout, and the furnishings, such as in step S307. After that, one or more proposals of furnishing decoration can be produced, such as in step S309. It is noted that the system is able to provide a variety of more flexible services such as rendering multiple proposals for the user to make decision.

When the system receives the confirmation made by the terminal, namely selecting one of the proposals of furnishing decoration, in step S311 the system may provide a composite image besides the content of the proposal. The proposal and the composite in final decision are delivered to the terminal device, such as step S313.

It is worth noting that the above flow allows the user make a decision of selecting one of the proposals when he arrives at the residence space or exhibit place. When the system receives the decision made by the user, the system may instantly inform the retailer to convey the related furnishings to the destination. The user may accordingly dispose the furnishings based on the proposal of furnishing decoration. In one further aspect, the furnishings may be placed in the residence space or exhibit place, the user may follow the above flow to get the proposal from the server and conduct the furnishing.

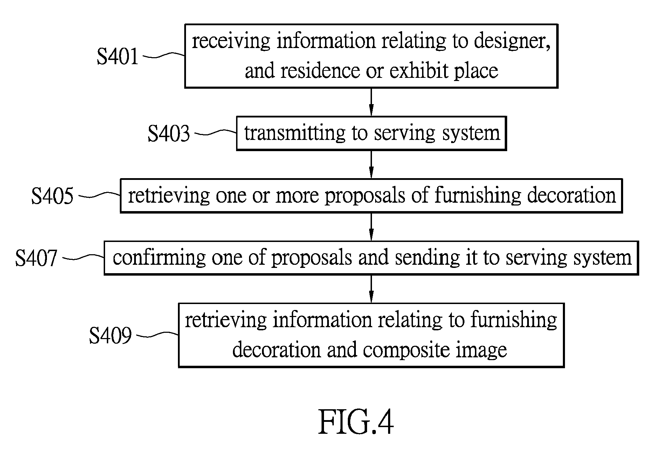

At the side of the terminal device, the mentioned application program may be beforehand installed in the terminal device. The application program is used to issue the request message, receive instant position of the terminal device, and receive the proposal of furnishing decoration. Fig. 4 shows another flow chart of the method in one embodiment.

The terminal device may receive the information relating to the designer and residence space or exhibit place by various ways. Such as in step S401, the application program initiates an input interface provided for the user to input his requirement such as including the user's preferred designer. Another situation is the user is a designer. After that, the system receives the request message made by the input interface base on the user's preference. Further, the user may also input the location of the residence space or exhibit place via the input interface. Still further, the terminal device's instant position is directed to the location of the interested place when the system adopts the device's positioning system, e.g. global positioning system (GPS). The location of the terminal allows the system to find out the information relating to the residence space or exhibit place.

Next, the request message associated with the information relating to the user's preferred designer, and residence space or exhibit place is sent to the serving system, such as in step S403. After the system operates based on the request message, such as the process described in Fig. 3, the terminal device will receive one or more proposals of furnishing decoration, such as step S405.

The proposal of furnishing decoration records the statement of the designer's style, and disposal of the furnishings. A composite image such as a plan view or a three-dimensional diagram may also be associated with the proposal. More detailed descriptions of the furnishings may also be attached. In step S407, the user then affirms the content of the proposal, and the decision will be transmitted to the serving system. If multiple proposals are provided by the system, the user can select one of the proposals via the selection interface initiated by the application program. When the system receives the confirmation made by the terminal, the related content of the proposal, optionally including the composite image, is produced in the system, and sent to the terminal device. In step S409, the terminal device finally receives the content concerning the furnishing decoration, and composite image.

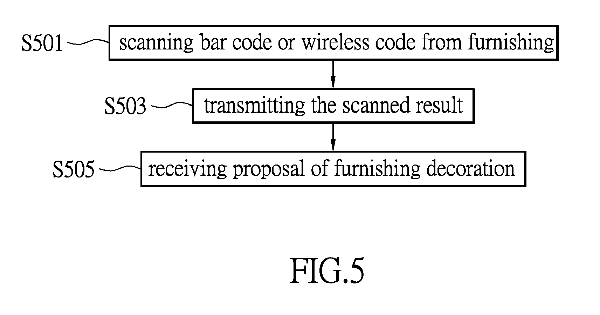

In one further embodiment of the invention, when the user or the designer obtains furnishing elements related to the proposal from the serving system, the system may help to provide the description for the every furnishing element and its arrangement. Fig. 5 further shows the flow chart of obtaining the details for the elements. The flow describes the steps of obtaining the suggestion of disposing the furnishing for the residence space or exhibit place.

In step S501, the user manipulates the smart portable device as the terminal device to scan a bar code or electronic tag disposed on the furnishing using a scanning program. The scanning program is such as one of the functions of the application program, e.g. APP. The scanning program may also be an individual program installed in the terminal device. For example, the scanning program is a QR code scanner used to scan the QR code printed on or adhered to the furnishing. Further, the electronic tag carrying the wireless code associated to the furnishing may also be used for the user to get the details. The electronic tag is such as an RFID tag, or tag for NFC code. The signals carried by the electronic tag are related to a URL or text concerning the arrangement directed to the furnishing. While the scanning program is activated to read or scan the bar code or the electronic tag, such as in step S503, the system will provide the content related to the scanned result. The device executing the scanning program is able to get the description and suggestion of arranging the furnishing, or even the image relating to disposal of the furnishing, such as in step S505.

The user uses the terminal device such as a smart phone, tablet or notebook computer to acquire the suggestion of furnishing decoration. For example, when the user wants to arrange the furnishing, the user can first use the terminal device to scan or to read the bar code or electronic tag for the furnishing element. The result is then transmitted to a cloud system. The system then responds the statement or just a URL to the terminal device. The statement or the content linked to URL is related to the details for arranging the furnishing decoration in the proposal.

Thus, through the system for providing proposal of furnishing decoration for specific residence or exhibit place, the user may easily get the proposal from the cloud-based server, including the information relating to the designer, and the suggestion of disposing the decoration for the residence space or exhibit place. The content sent from the system may be in form of text, plan view, or three-dimensional diagram which is provided for the user conveniently to conduct the arrangement.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A method for providing proposal of furnishing decoration for residence or exhibit place (243), comprising:
analyzing a request message delivered by a terminal device (22), and retrieving information at least concerning a designer (241) and a residence or an exhibit place (243);
querying a database, so as to retrieve the designer's style, a layout of the residence or the exhibit place (243), and data relating to furnishings;
creating one or more proposals of furnishing decoration; and
delivering the one or more proposals to the terminal device (22).

2. The method according to claim 1, wherein the request message further asks for receiving data relating information of one or more designers' proposals of furnishing decoration.

3. The method according to claim 2, wherein, when the one or more proposals are created, one or more corresponding composite images describing the decoration of the residence or the exhibit place (243) are generated.

4. The method according to claim 1, wherein the terminal device (22) is installed with an application program, which is used to issue the request message, get an instant position of the terminal device (22), and receive the proposal of the furnishing decoration.

5. The method according to claim 4, wherein the application program initiates an input interface for receiving input request message.

6. The method according to claim 4, wherein the application program initiates a selection interface for selecting one of the proposals of furnishing decoration.

7. The method according to one of claims 1 to 6, wherein the one selected proposal includes information of disposing the furnishings.

8. The method according to claim 7, wherein the furnishing is disposed with a bar code or an electronic tag, which is read by a scanning program in the terminal device (22), so as to receive an image relating to disposal of the furnishing.

9. A system for providing proposal of furnishing decoration for residence or exhibit place (243) which is used to perform the method according to claim 1, comprising:
a serving system (20), comprising:
a communication module (201), communicated with a terminal device (22), used to receive a request message made by the terminal device (22), and transmit one or more proposals of furnishing decoration;
an analyzing module (202), used to get a designer's style, a layout of a residence or an exhibit place (243), and information corresponding to furnishings as comparing a database with information of the designer and the residence or the exhibit place (243) recorded in the request message;
an image processing module (203), used to generate a composite image describing the decoration of the residence or the exhibit place (243) in accordance with the designer's style, the layout of the residence or the exhibit place (243), and information relating to the furnishing; and
a database module (204) preparing the database having data of designers, furnishing retailers, residence spaces, and/or exhibit places, and data of various furnishing elements (244).

10. The system according to claim 9, wherein the request message transmitted by the terminal device (22) is generated by an application program installed in the terminal device (22); the application program issues the request message, retrieves an instant position of the terminal device (22), receives one or more proposals of furnishing decoration, confirming one proposal thereof, and receives a disposal and the composite image of the furnishing.
